# EUROPÄISCHE PATENTSCHRIFT

(11) **EP 1 578 838 B1**
(45) Veröffentlichungstag und Bekanntmachung des Hinweises auf die Patenterteilung: **23.08.2006**
(21) Anmeldenummer: 03782425.7
(22) Anmeldetag: 17.12.2003
(51) Int. Cl.: C08G 59/14, C08L 63/02, C08G 59/68

(54) **HITZE-HÄRTBARE EPOXIDHARZZUSAMMENSETZUNG MIT VERBESSERTER TIEFTEMPERATUR-SCHLAGZÄHIGKEIT**
THERMALLY CUARBLE EPOXY RESIN COMPOSITION HAVING AN IMPROVED IMPACT RESISTANCE AT LOW TEMPERATURES
COMPOSITION DE RESINE EPOXY THERMODURCISSABLE PRESENTANT UNE MEILLEURE RESISTANCE AUX CHOCS A BASSE TEMPERATURE

(30) Priorität: 17.12.2002 EP 02028332
(43) Veröffentlichungstag der Anmeldung: 28.09.2005
(73) Patentinhaber: Sika Technology AG, 6340 Baar (CH)
(72) Erfinder: KRAMER, Andreas, CH-8006 Zürich (CH); FINTER, Jürgen, CH-8037 Zürich (CH)
(74) Vertreter: Isler, Jörg
(86) Internationale Anmeldenummer: PCT/EP2003/014382
(87) Internationale Veröffentlichungsnummer: WO 2004/055092

(56) Entgegenhaltungen:
- EP-A- 0 343 676
- DE-A- 19 751 143
- US-A- 3 505 283
- US-A- 6 077 884
- US-B1- 6 207 733

## Beschreibung

### Technisches Gebiet

Die Erfindung betrifft hitzehärtende Zusammensetzungen, welche bei tiefen Temperaturen bis -40°C gleichzeitig eine hohe Schlagzähigkeit und gute mechanische Eigenschaften aufweisen und insbesondere als einkomponentige Klebstoffe eingesetzt werden können, sowie Schlagzähigkeitsmodifikatoren für Epoxidharze bei tiefen Temperaturen.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Dadurch entstehen Vorteile und neue Möglichkeiten in der Fertigung, beispielsweise die Fertigung von Verbund- und Hybridwerkstoffen oder auch größere Freiheiten beim Design von Bauteilen. Die Klebstoffe müssen für eine Anwendung in der Fahrzeugherstellung gute Haftungen auf allen eingesetzten Untergründen, insbesondere elektrolytisch verzinkten, feuerverzinkten, und nachträglich phosphatierten Stahlblechen, beölten Stahlblechen sowie auf verschiedenen, gegebenenfalls oberflächenbehandelten, Aluminiumlegierungen aufweisen. Diese guten Haftungseigenschaften müssen besonders auch nach Alterung (Wechselklima, Salzsprühbad etc.) ohne grosse Qualitätseinbussen erhalten bleiben. Wenn die Klebstoffe als Rohbauklebstoffe im Automobilbau eingesetzt werden, ist die Beständigkeit dieser Klebstoffe gegenüber Reinigungsbädern und Tauchlackierung (sog. Auswaschbeständigkeit) von grosser Wichtigkeit, damit die Prozess-Sicherheit beim Hersteller garantiert werden kann.

Die Klebstoffe für den Rohbau müssen unter den üblichen Einbrennbedingungen von idealerweise 30 Min. bei 180°C aushärten. Des weiteren müssen sie aber auch bis circa 220°C beständig sein. Weitere Anforderungen für einen solchen gehärteten Klebstoff beziehungsweise der Verklebung sind die Gewährleistung der Betriebssicherheit sowohl bei hohen Temperaturen bis circa 90°C als auch bei tiefen Temperaturen bis circa -40°C. Da es sich bei diesen Klebstoffen um strukturelle Klebstoffe handelt und deshalb diese Klebstoffe strukturelle Teile verkleben, sind eine hohe Festigkeit und Schlagzähigkeit des Klebstoffes von grösster Wichtigkeit.

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl grosse Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (< -10°C).

In der Literatur werden im Wesentlichen zwei Methoden vorgeschlagen, wie die Sprödigkeit von Epoxidklebstoffen reduziert und damit die Schlagzähigkeit erhöht werden kann: Einerseits kann das Ziel durch die Beimengung von zumindest teilvernetzten hochmolekularen Verbindungen wie Latices von Kern/Schale-Polymeren oder anderen flexibilisierenden Polymeren und Copolymeren erreicht werden. Andererseits kann auch durch Einführung von Weichsegmenten, z.B. durch die entsprechende Modifizierung der Epoxidkomponenten, eine gewisse Zähigkeitserhöhung erreicht werden.

Gemäss der erstgenannten Technik entsprechend der Lehre im Patent US 5,290,857 können Epoxidharze schlagzäher gemacht werden, indem ein feines, pulverförmiges Kern/Schalenpolymer in die Epoxidmatrix eingemischt wird. Dadurch entstehen in der hart-spröden Epoxidmatrix hochelastische Domänen, welche die Schlagzähigkeit erhöhen. Solche Kern/Schalenpolymere sind in Patent US 5,290,857 basierend auf Acrylat- oder Methacrylat-polymere beschrieben.

Gemäss der zweitgenannten Technik werden in Patent US 4,952,645 Epoxidharz-Zusammensetzungen beschrieben, welche durch die Umsetzung mit aliphatischen, cycloaliphatischen oder aromatischen Carbonsäuren, insbesondere di- oder trimeren Fettsäuren, sowie mit Carbonsäurenterminierten aliphatischen oder cyclo-aliphatischen Diolen flexibilisiert wurden. Solche Zusammensetzungen sollen sich durch eine erhöhte Flexibilität insbesondere bei tiefen Temperaturen auszeichnen.

EP 0 343 676 beschreibt reaktiven Hotmelt-Epoxidklebstoff mit einem Polyurethan-Epoxid-Addukt. Dabei werden die endständigen Isocyanatgruppen von Präpolymeren mit mindestens einem hydroxylgruppenhaltigen Epoxidharz einer OH-Funktionalität von grösser 2 derart umgesetzt, dass ein bei Raumtemperatur fester Schmelzklebstoff erhalten wird.

Bekannt ist auch, dass Epoxidharze mit Elastomeren wie synthetischen Kautschuken und deren Derivaten flexibilisiert werden können. Der Haupteffekt betreffend die Zähelastifizierung beruht dabei auf der nur teilweisen Mischbarkeit der Epoxidharze und den entsprechenden derivatisierten synthetischen Kautschuken, wodurch beim Herstellprozess heterodisperse Phasen entstehen, welche einen den Kern/Schale-Polymeren vergleichbaren Effekt haben. Die Einstellung dieser Überstruktur ist jedoch sowohl von der mengenmässigen Zusammensetzung als auch von den Prozessführung während des Härtungsprozesses sehr abhängig. Dies führt dazu, dass eine kontinuierlich gleichbleibende Qualität sehr schwierig zu erreichen ist.

### Darstellung der Erfindung

Es ist die Aufgabe der vorliegenden Erfindung, neue Schlagzähigkeitsmodifikatoren für Epoxidharz-Zusammensetzungen zur Verfügung zu stellen, die insbesondere für den Einsatz bei tiefen Temperaturen geeignet sind. Diese Schlagzähigkeitsmodifikatoren sollen vorzugsweise als Bestandteil von bei Raumtemperatur stabilen, einkomponentigen und hitzehärtenden Zusammensetzungen, insbesondere Klebstoffen und Schmelzklebstoffen, geeignet sein.

Überraschenderweise wurde gefunden, dass dies durch den Einsatz von mit Epoxidgruppen-terminierten polymeren Verbindungen der allgemeinen Formel (I) erreicht werden kann: 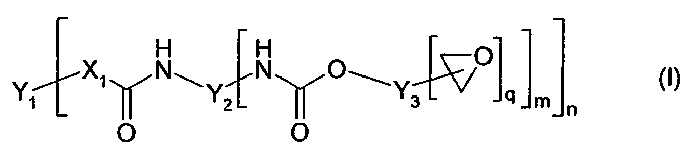 wobei X₁ = O, S oder NH ist;
Y₁ für einen n-wertigen Rest eines reaktiven Polymeren nach dem Entfernen der endständigen, Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht
oder für einen trivalenten Rest von Trimeren oder Biureten von aliphatischen, cycloaliphatischen, aromatischen oder araliphatischen Diisocyanaten nach Entfernen der Isocyanatgruppen steht;
Y₃ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht;
sowie q = 1, 2 oder 3 ist; m = 1 oder 2 ist und n = 2, 3 oder 4 ist.

Es hat sich gezeigt, dass dieses Polymer der Formel (I) einen guten Schlägzähigkeitsmodifikator darstellt.
Ein besonderer Aspekt der Erfindung stellt eine Zusammensetzung dar, welche mindestens ein Epoxid-Addukt **A** mit durchschnittlich mehr als einer Epoxidgruppe pro Molekül sowie mindestens ein Polymer **B** der Formel (I) sowie mindestens ein Thixotropiermittel **C**, auf Basis eines Harnstoffderivates in einem nicht-diffundierenden Trägermaterial, sowie mindestens einen Härter **D** für Epoxidharze, welcher durch erhöhte Temperatur aktiviert wird, umfasst.
Diese Zusammensetzung dient insbesondere als Klebstoff und weist einen ausserordentlich hohen Schlagschälarbeitswert, insbesondere bei tiefen Temperaturen, auf.

Gemäss bevorzugten Ausführungsformen sind weiterhin Zusammensetzungen beschrieben, die zusätzlich mindestens einen Füllstoff **E** und/oder mindestens einen Reaktiwerdünner **F** enthalten.

Weiterer Gegenstand der Erfindung sind Epoxidgruppen-terminierte Schlagzähigkeitsmodifikatoren der Formel (I). Es hat sich gezeigt, dass diese neuen Schlagzähigkeitsmodifikatoren eine bedeutende Schlagzähigkeitserhöhung in Epoxidharz-Zusammensetzungen, insbesondere 1-Komponentigen hitzehärtenden Epoxidharz-Zusammensetzungen sowie bei 2-Komponenten-Epoxidharz-Zusammensetzungen, bewirken.

### Weg zur Ausführung der Erfindung

Die vorliegende Erfindung betrifft Zusammensetzungen, welche mindestens ein Epoxid-Addukt **A** mit durchschnittlich mehr als einer Epoxidgruppe pro Molekül, mindestens ein Polymer **B** der Formel (I), mindestens ein Thixotropiermittel **C**, auf Basis eines Harnstoffderivates in einem nicht-diffundierenden Trägermaterial und mindestens einen Härter D für Epoxidharze, welcher durch erhöhte Temperatur aktiviert wird, enthalten.

Das Epoxid-Addukt **A** ist ein Epoxid-Addukt **A1** oder ein Epoxid-Addukt **A2**.

Das Epoxid-Addukt **A1** ist erhältlich aus der Reaktion von mindestens einer Dicarbonsäure und mindestens einem Diglycidylether. Das Epoxid-Addukt **A2** ist erhältlich aus der Reaktion von mindestens einem Bis(aminophenyl)sulfon-Isomeren oder von mindestens einem aromatischen Alkohol und mindestens einem Diglycidylether.

Die zur Herstellung des Epoxid-Addukt **A1** verwendete Dicarbonsäure ist vorzugsweise eine Dimerfettsäure. Als besonders geeignet gezeigt haben sich dimere C₄ - C₂₀ Fettsäuren, welche C₈ - C₄₀ Dicarbonsäuren darstellen.

Bei den Diglycidylethern handelt es sich vorzugsweise um ein Flüssigharz, insbesondere Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Durch die Herstellungsverfahren dieser Harze bedingt, ist klar, dass in den Flüssigharzen auch höher molekulare Bestandteile enthalten sind. Solche Flüssigharze sind beispielsweise als Araldite GY 250, Araldite PY 304, Araldit GY 282 (Vantico) oder D.E.R 331 (Dow) erhältlich.

Das Epoxid-Addukt **A1** weist einen flexibilisierenden Charakter auf.

Das Epoxid-Addukt **A2** ist erhältlich durch die Reaktion mindestens eines Bis(aminophenyl)sulfon-Isomeren oder mindestens eines aromatischen Alkohols mit mindestens einem Diglycidylether. Der aromatische Alkohol ist bevorzugt ausgewählt aus der Gruppe von 2,2-Bis(4-hydroxyphenyl)propan (=Bisphenol-A), Bis(4-hydroxyphenyl)methan (=Bisphenol-F), Bis(4-hydroxyphenyl)sulfon, Hydrochinon, Resorcin, Brenzkatechin, Naphthochinon, Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan sowie alle Isomeren der vorgenannten Verbindungen. Als besonders bevorzugter aromatischen Alkohol ist Bis(4-hydroxyphenyl)sulfon geeignet.

Die bevorzugten Bis(aminophenyl)sulfon-Isomeren sind Bis(4,-aminophenyl)sulfon und Bis(3-aminophenyl)sulfon.

Die bevorzugten Diglycidylether sind die bereits für Epoxid-Addukt **A1** beschrieben Diglycidylether.

Das Epoxid-Addukt **A2** weist eine eher starre Struktur auf.

Besonders bevorzugt ist die gleichzeitige Anwesenheit von Epoxid-Addukt **A1** und Epoxid-Addukt **A2** in Zusammensetzungen gemäss Anspruch 1.

Das Epoxid-Addukt **A** weist bevorzugt ein Molekulargewicht von 700 - 6000 g/mol, vorzugsweise 900 - 4000 g/mol, insbesondere 1000 - 3300 g/mol auf. Unter 'Molekulargewicht' oder 'Molgewicht' wird hier und im Folgenden das Molekulargewichtsmittel Mₙ verstanden.

Die Herstellung des Epoxid-Adduktes **A** erfolgt in der dem Fachmann bekannten Weise. Vorteilhaft wird am Ende der Adduktierung noch eine Zusatzmenge des oder der für die Adduktierung verwendeten Diglycidylether zugegeben und als Epoxid-Addukt **A**-Vormischung eingesetzt. In dieser Epoxid-Addukt **A**-Vormischung beträgt der Gesamtanteil des oder der nicht reagierten Diglycidylether 12 - 50 Gewichts-%, vorzugsweise 17 - 45 Gewichts-%, bezogen auf die Gewichtsumme der Epoxid-Addukt **A**-Vormischung.

Unter 'Gesamtanteil' wird hier und im Folgenden jeweils die Summe aller zu dieser Kategorie gehörenden Bestandteile verstanden. Kommen beispielsweise in der Adduktierung gleichzeitig zwei verschiedene Diglycidylether vor, so ist als Gesamtanteil der Diglycidylether die Summe dieser zwei Diglycidylether zu verstehen.

Weiterhin vorteilhaft beträgt der Gewichtsanteil der Epoxid-Addukt **A-**Vormischung 20 - 70 Gewichts-%, vorzugsweise 35 - 65 Gewichts-%, bezogen auf das Gewicht der gesamten Zusammensetzung.

Das Polymer **B** ist durch Formel (I) darstellbar

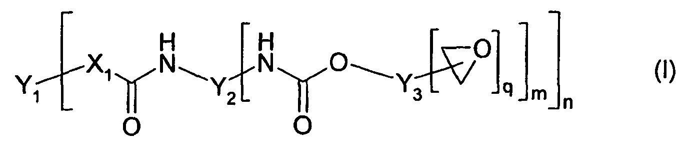

X₁ stellt hierbei O, S oder NH dar. Y₁ steht für einen n-wertigen Rest eines reaktiven Polymeren nach dem Entfernen der endständigen Amino-, Thiol- oder Hydroxylgruppen. Y₂ steht für einen divalenten Rest von aliphatischen, cycloaliphatischen, aromatischen oder araliphatischen Diisocyanaten nach Entfernen der Isocyanatgruppen oder für einen trivalenten Rest von Trimeren oder Biureten von aliphatischen, cycloaliphatischen, aromatischen oder araliphatischen Diisocyanaten nach Entfernen der Isocyanatgruppen. Y₃ steht für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen.

Für die Indizes q gelten die Werte q = 1, 2 oder 3 und für m die Werte m = 1 oder 2, während für n die Werte n = 2, 3 oder 4 gelten.

Das Polymer **B** der Formel (I) ist beispielsweise erhältlich durch die Umsetzung von isocyanat-terminierten Präpolymeren der Formel (II) mit Monohydroxy-Epoxidverbindungen der Formel (III) entsprechend der Reaktion *RS1*:

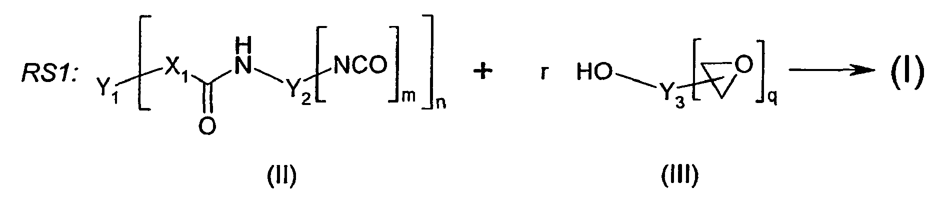

Die eingesetzten isocyanat-terminierten Präpolymere der Formel (II) sind das Umsetzungsprodukt von Polyisocyanaten der Formel (V) und X₁H-Gruppen tragenden Verbindungen der Formel (IV) entsprechend der Reaktion *RS2:*

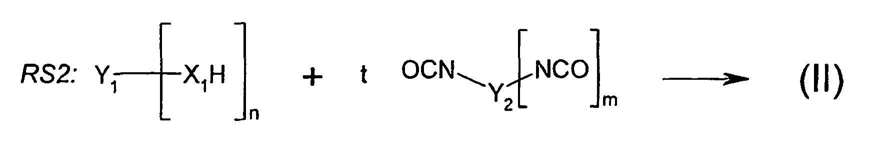

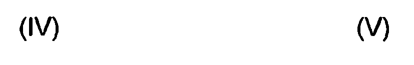

Die Polymere der Formel (IV) weisen Gruppen X₁H auf. Diese können unabhängig voneinander OH, SH, oder NH₂ sein. Bevorzugt ist die HydroxylGruppe.

Bevorzugte Verbindungen der Formel (IV) sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 g/mol, Polyoxybutylendiole und -triole, Polyoxypropylendiole und -triole mit einem Molekulargewicht von 400 - 8'000 g/mol, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Polyhydroxyterminierte Polybutadienpolyole;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere der Formel (IV) di- oder höherfunktionelle Polyole mit OH-Equivalentsgewichten von 600 bis 6000 g/OH-Equivalent, vorzugsweise von 700 bis 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Blockpolymeren, Polybutylenglycolen, hydroxylterminierte Polybutadien, hydroxylterminierte Polybutadien-co-Acrylnitril, hydroxylterminierte synthethische Kautschuke und Gemische dieser genannten Polyole.

Im Weiteren können als Polymere der Formel (IV) auch mit di- oder höherfunktionellen aminterminierten Polyethylenethem, Polypropylenethem, Polybutylenethern, Polybutadienen, Polybutadien/Acrylnitrilen sowie weiteren aminterminierten synthetischen Kautschuken oder Gemischen der genannten Komponenten verwendet werden.

Als Polymere der Formel (IV) sind insbesondere bevorzugt α,ω- Polyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Hydroxylgruppen-terminierte Polyoxybutylene.

Die Polyisocyanate der Formel (V) sind Diisocyanate oder Triisocyanate. Geeignete Diisocyanate aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)- bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Eine weitere Möglichkeit für Y₁ sind kettenverlängerte Reste von Molekülen nach Entfernung der X₁H-Gruppen, die formell durch eine Reaktion ähnlich dem Schema RS2 zwischen den bereits oben erwähnten Di- oder Triolen und/oder Di- oder Triaminen sowie den bereits erwähnten Di- oder Triisocyanaten erhältlich sind. Durch Variation von t Schema RS2, respektive der Stöchiometrie, gibt es hierfür zwei Möglichkeiten.

Einerseits können durch einen Überschuss der X₁H-Gruppen bezogen auf die NCO-Gruppen OH-funktionelle Polymere mit unterschiedlich langen Ketten erhalten werden. Solche kettenverfängerte Polyole oder Polyamine der Formel (IV) enthalten Urethan- oder Harnstoff-Gruppen in der Kette und können mit anderen Di- oder Triisocyanaten weiter umgesetzt werden, so dass Polymere der Formel (II) entstehen.

Anderseits können durch einen Unterschuss der X₁H-Gruppen bezogen auf die NCO-Gruppen NCO-funktionelle Polymere der Formel (II) mit unterschiedlich langen Ketten erhalten werden.

Die Kettenlänge und Vernetzungsgrad dieser Kettenverlängerten Polymere der Formel (II) ist sehr stark abhängig vom Verhältnis [X₁H]/[NCO]. Die Ketten sind umso länger je näher dieses Verhältnis bei 1 ist. Es ist dem Fachmann klar, dass zu lange Ketten beziehungsweise zu hoher Vernetzungsgrad zu nicht mehr verwendbaren Polymeren führen würde.

Für die Kettenverlägerung werden insbesondere Diole oder Diamine und Diisocyanate bevorzugt.

Die Monohydroxy-Epoxidverbindung der Formel (II) weist 1, 2 oder 3 Epoxygruppen auf. Die Hydroxidgruppe dieser Monohydroxy-Epoxidverbindung (II) kann eine primäre oder eine sekundäre Hydroxylgruppe darstellen.

Zur Umsetzung der so erhaltenen endständigen Isocyanate können entsprechende Mengen monohydroxylhaltigen Epoxide der Formel (III) eingesetzt werden. Von der Stöchiometrie, welche in Reaktionsschema *RS1* durch r = m*n, entsprechend einem Verhältnis [OH]/[NCO] = 1, gegeben ist, kann jedoch abgewichen werden. Das Verhältnis [OH]/[NCO] beträgt 0.6 bis 3.0, vorzugsweise 0.9 bis 1.5, insbesondere 0.98 bis 1.1.

Je nach Reaktionsführung entstehen bei der Umsetzung von mehrfunktionellen Alkoholen mit Epichlorhydrin als Nebenprodukte auch die entsprechenden Monohydroxy-epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (VI), der in handelsüblichen flüssigen Epoxidharzen hergestellt aus Bisphenol-A (R = CH₃) und Epichlorhydrin zu etwa 15 % enthalten ist, sowie die entsprechenden β-Hydroxyether, die bei der Reaktion von Bisphenol-F (R = H) oder des Gemisches von Bisphenol-A und Bisphenol-F mit Epichlorhydrin gebildet werden.

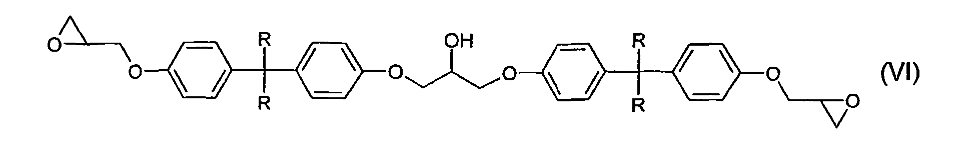

Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxy-Epoxidverbindung der Formel (III) lässt eine effiziente Umsetzung mit terminalen Isocyanatgruppen von Präpolymeren zu, ohne dafür unverhältnismässige Überschüsse der Epoxidkomponente einsetzen zu müssen.

Das Polymer **B** weist vorteilhaft einen elastischen Charakter auf und ist weiterhin vorteilhaft in Epoxidharzen löslich oder dispergierbar.

Das Polymer **B** kann bei Bedarf und je nach der resultierenden Viskosität mit weiteren Epoxidharzen verdünnt werden. Bevorzugt sind hierzu Diglycidylether von Bisphenol-A, Bisphenol-F sowie von Bisphenol-A/F, aber sowie die weiter unten beschriebenen epoxidgruppentragenden Reaktivverdünner **F**, insbesondere Hexandioldiglycidylether, Polypropylenglykoldiglycidylether und Trimethylolpropantriglycidylether.

Vorteilhaft beträgt der Gesamtanteil des Polymeren **B** 5 - 40 Gewichts-%, vorzugsweise 7 - 30 Gewichts-%, bezogen auf das Gewicht der gesamten Zusammensetzung.

Weiterhin enthält die Zusammensetzung mindestens ein Thixotropiermittel **C**, auf Basis eines Harnstoffderivates in einem nicht-diffundierenden Trägermaterial. Die Herstellung von solchen Harnstoffderivaten und Trägermaterialien sind im Detail in der Patentanmeldung EP 1 152 019 A1 beschrieben. Das Trägermaterial ist vorteilhaft ein blockiertes Polyurethanpräpolymer **C1,** insbesondere erhalten durch Umsetzung eines trifunktionellen Polyetherpolyols mit IPDI und anschliessender Blockierung der endständigen Isocyanatgruppen mit Caprolactam.

Das Harnstoffderivat ist ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Vorteilhaft beträgt der Gesamtanteil des Thixotropiermittels C 5 - 40 Gewichts-%, vorzugsweise 10 - 25 % Gewichts-%, bezogen auf das Gewicht der gesamten Zusammensetzung. Der Anteil des Harnstoffderivats beträgt vorteilhaft 5 - 50 Gewichts-%, vorzugsweise 15 - 30 Gewichts-%, bezogen auf das Gewicht des Thixotropiermittels **C**.

Die erfindungsgemässe Zusammensetzung enthält weiterhin mindestens einen Härter **D** für Epoxidharze, welcher durch erhöhte Temperatur aktiviert wird. Es handelt sich hierbei vorzugsweise um einen Härter, welcher ausgewählt ist aus der Gruppe Dicyandiamid, Guanamine, Guanidine, Aminoguanidine und deren Derivate. Weiterhin möglich sind katalytisch wirksame substituierte Harnstoffe wie 3-Chlor-4-Methylphenylharnstoff (Chlortoluron), oder Phenyl-Dimethylhamstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Vorteilhaft beträgt der Gesamtanteil des Härters **D** 1 - 10 Gewichts-%, vorzugsweise 2 - 8 Gewichts-%, bezogen auf das Gewicht der gesamten Zusammensetzung.

In einer bevorzugten Ausführungsform enthält die Zusammensetzung zusätzlich mindestens einen Füllstoff E. Bevorzugt handelt es sich hierbei um Glimmer, Talk, Kaolin, Wollastonit, Feldspat, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **E** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs E 5 - 30 Gewichts-%, vorzugsweise 10 - 25 Gewichts-%, bezogen auf das Gewicht der gesamten Zusammensetzung.

In einer weiteren bevorzugten Ausführungsform enthält die Zusammensetzung zusätzlich mindestens einen epoxidgruppentragenden Reaktiwerdünner **F**. Bei diesen Reaktivverdünnern **F** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Aethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresolglycidylether, p-tert.-Butytphenylglycidylether, Nonylphenolglycidylether, 3-n-Pentadecenyl-glycidylether (aus Cashewnuss-Schalen-Öl), N,N-Diglycidylanilin etc.
- Epoxidierte Tertiäre Amine wie N, N-Diglycidylcyclohexylamin etc.
- Epoxidierte Mono- oder Dicarbonsäuren wie Neodecansäureglycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycoldiglycidylether etc.

Besonders bevorzugt sind Hexandioldiglycidylether, Polypropylenglycoldiglycidylether und Polyethylenglycoldiglycidylether.

Vorteilhaft beträgt der Gesamtanteil des epoxidgruppentragenden Reaktivverdünners **F** 1 - 7 Gewichts-%, vorzugsweise 2 - 6 Gewichts-%, bezogen auf das Gewicht der gesamten Zusammensetzung.

Es hat sich gezeigt, dass sich die erfindungsgemässe Zusammensetzung sich besonders erfolgreich als einkomponentige Klebstoffe eignen. Insbesondere sind hiermit hitzehärtende einkomponentige Klebstoffe realisierbar, die sich durch eine hohe Schlagzähigkeit sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen Zusammensetzung kann vor allem die gewünschte Kombination von hoher Crashfestigkeit und hoher sowie tiefer Einsatztemperatur erreicht werden.

Ein solcher Klebstoff wird zuerst mit den zu verklebenden Materialien bei einer Temperatur von zwischen 10° C und 80°C, insbesondere zwischen 10°C und 60°C, kontaktiert und anschliessend typischerweise bei einer Temperatur von 100 - 220 °C, vorzugsweise 120 - 200°C, ausgehärtet.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders naheliegend sind verwandte Anwendungen in Transportmittelbau wie Schiffe, Lastwagen, Busse oder Schienenfahrtzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 100°C und - 40°C, vorzugsweise zwischen 80°C und -40°C, insbesondere zwischen 50°C und -40°C zum Einsatz.

Die Zusammensetzungen weisen typischerweise Bruchenergie, gemessen nach DIN 11343, von mehr als 10J bei 0°C, sowie bevorzugt mehr als 1.0 J bei -40°C auf. Insbesondere bevorzugt sind Bruchenergien von mehr als 11.5 J bei 0°C und bei -40°C von mehr als 1.5 J.

In einer speziellen Weise sind auch Schmelzklebstoffe auf der Basis der erfindungsgemässen Zusammensetzung realisierbar. Hierbei werden zusätzlich die beim Epoxid-Addukt **A** entstehenden Hydroxygruppen mit Polyisocyanat, beziehungsweise einem Polyisocyanat-Präpolymer, umgesetzt. Dadurch wird die Viskosität erhöht, und eine Warmapplikation erforderlich.

Ein weiterer Aspekt der Erfindung sind neue Epoxidgruppen-terminierter Schlagzähigkeitsmodifikatoren der Formel (I), deren detaillierte Konstitution und Wege zur Herstellung bereits weiter vorne beschrieben worden sind.

Es hat sich gezeigt, dass diese Epoxidgruppen-terminierte Schlagzähigkeitsmodifikatoren der Formel (I) epoxidharz-haltigen Zusammensetzungen beigefügt werden können. Neben den bereits beschriebenen hitzehärtenden 1-Komponenten Zusammensetzungen eignen sie sich auch sehr gut bei 2- oder Mehr-Komponenten Epoxidharzzusammensetzungen, insbesondere für solche, deren zweite Komponente ein Amin- beziehungsweise ein Polyaminhärter darstellt. Die Epoxidgruppen-terminierte Schlagzähigkeitsmodifikatoren der Formel (I) werden der Härterkomponente zugegeben, wobei ein oder mehrere Addukte gebildet werden, oder, vorzugsweise, derjenigen Komponente zugegeben, welche das Epoxidharz enthält. Weitere, weniger bevorzugte, Möglichkeiten sind die Zugabe eines Epoxidgruppen-terminierten Schlagzähigkeitsmodifikators direkt bei der Applikation oder die Zugabe als Bestandteil einer dritten oder weiteren Komponente bei der Applikation.

Die Aushärtungstemperatur solcher 2- oder Mehr-Komponenten-Epoxidharzzusammensetzungen ist vorzugsweise zwischen 10°C und 60°C, insbesondere zwischen 15°C und 50°C. Epoxidgruppen-terminierte Schlagzähigkeitsmodifikatoren der Formel (I) eignen sich insbesondere als Zusatz zu 2-Komponenten Epoxidharzklebstoffen. Die Erhöhung der Schlagzähigkeit,ist hierbei nicht auf tiefe Temperaturen beschränkt.

Diese Zusammensetzungen, insbesondere Klebstoffe, werden unmittelbar vor der Applikation mit einem 2- oder Mehr-Komponentenmischgerät auf die zu kontaktierenden Materialien aufgetragen. Solche 2- oder Mehrkomponentenklebstoffe können sowohl im Automobilbau als auch im Transportmittelbau (Schiffe, Lastwagen, Busse oder Schienenfahrzeuge) oder im Bau von Gebrauchsgütem wie beispielsweise Waschmaschinen, aber auch im Bausektor beispielsweise als versteifende Strukturklebstoffe (u.a. Verbundwerkstoffe etc.) eingesetzt werden.

### Beispiele

Im folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

Allgemeine Herstellung des Epoxidadduktes **A** beziehungsweise der Epoxid-Addukt **A**-Vormischung:

### Beispiel für Epoxid-Addukt A-Vormischung: A-VM1

Bei 110°C wurden unter Vakuum und Rühren 123.9 g einer dimeren Fettsäure, 1.1 g Triphenylphosphin sowie 71.3 g Bis(4-hydroxyphenyl)sulfon mit 658 g eines flüssigen DGEBA-Epoxidharzes mit einem Epoxidgehalt von 5.45 eq/kg 5 Stunden lang umgesetzt, bis eine konstante Epoxidkonzentration von 2.82 eq/kg erreicht war. Nach dem Ende der Reaktion wurden dem Reaktionsgemisch **A** zusätzlich 187.0 g flüssigen DGEBA-Epoxidharzes zugegeben.

| | |
|---|---|
| **Verwendete Rohstoffe** | **Lieferant** |
| Dimerisierte C18-Fettsäure (Pripol 1013) | Uniquema |
| Triphenylphosphin | Fluka AG |
| Bis(4-hydroxyphenyl)sulfon | Fluka AG |
| Bisphenol-A-diglycidylether (=DGEBA) | Vantico |
| Polypropylenglycol-diglycidylether (ED-506) | Asahi-Denka Kogyo |
| Dicyandiamid (=Dicy) | Degussa |
| Isophoron-diisocyanat (=IPDI) | Degussa-Hüls |
| Caprolactam | EMS Chemie |
| N-Butylamin | BASF |
| 4,4'-Diphenyl-methylen-diisocyanat (=MDI) | Bayer |
| Hexandioldiglycidylether | Prümmer |
| Alcupol® D-2021 | Repsol |
| (Difunktionelles Polypropylenglykol, OH-Equivalent-gewicht = 1000 g/OH-Equivalent) | |
| Desmophen 3060 BS | Bayer |
| (Trifunktionelles Polypropylenglykol, OH-Equivalent-gewicht = 1000 g/OH-Equivalent) | |
| PolyTHF 1000 | BASF |
| (Difunktionelles Polybutylenglykol, OH-Equivalent-gewicht = 500 g/OH-Equivalent) | |
| PolyTHF 2000 | BASF |
| (Difunktionelles Polybutylenglykol, OH-Equivalent-gewicht = 1000 g/OH-Equivalent) | |
| Poly bd® R45 HT | Atofina |
| (Hydroxylterminertes Polybutadien, OH-Equivalent-gewicht = ca. 1200 g/OH-Equivalent) | |
| Struktol Polydis® 3604 | Schill + Seilacher |
| (Nitrilkautschukmodifiziertes Epoxidharz (Epoxidgehalt 3.0 eq/kg) | |

### Tabelle 1

### Beispielhafte Herstellung eines monohydroxylhaltigen Epoxides

Trimethylolpropanglycidylether wurde gemäss dem Verfahren in Patent US 5,668,227, Beispiel 1 aus Trimethylolpropan und Epichlorhydrin mit Tetramethylammoniumchlorid und Natronlauge hergestellt. Man erhält ein gelbliches Produkt mit Epoxidzahl von 7.5 eq/kg und einem Hydroxylgruppengehalt von 1.8 eq/kg. Aus dem HPLC-MS Spektrum kann geschlossen werden, dass Trimethylolpropandiglycidylether zu wesentlichen Anteilen in Trimethylolpropantriglycidylether und vorliegt.

Im Folgenden werden unterschiedliche Beispiele der Herstellung des Polymers **B** der Formel (I) gezeigt.

### Beispiel 1 eines Polymers B: B-01

200 g PolyTHF 2000 (OH-Zahl 57.5 mg/g KOH) wurden 30 Minuten unter Vakuum bei 100°C getrocknet. Anschliessend wurden 47.5 g IPDI und 0.04 g Dibutylzinndilaurat zugegeben. Die Reaktion wurde unter Vakuum bei 90°C bis zur Konstanz des NCO-Gehaltes bei 3.6% nach 2.5 h geführt (theoretischer NCO-Gehalt: 3.7%). Anschliessend wurden 123.7 g des oben beschriebenen Trimethylolpropanglycidylethers als monohydroxylhaltiges Epoxid der Formel (III) zugegeben. Es wurde bei 90°C unter Vakuum weitergerührt, bis der NCO-Gehalt nach weiteren 3h unter 0.1% gesunken war. Nach Abschluss der Reaktion wurden 82.5 g DGEBA zugegeben (1/3 der Masse des unblockierten, NCO-endständigen Präpolymers). So wurde ein klares Produkt mit einem Epoxid-Gehalt ("End-EP-Gehalt") von 3.15 eq/kg erhalten.

### Beispiele 2 - 5 eines Polymers B: B-02 bis B-05

Die in Tabelle 2 zusammengefassten, beispielhaften Epoxidgruppen-terminierten Polymers **B**, bezeichnet als **B-02** bis **B-05**, wurden auf der Basis von unterschiedlichen Polyolen bzw. Polyolgemischen gemäss untenstehender Tabelle in gleicher Weise synthetisiert, wie sie für Beispiel **B-01** beschrieben ist. Die Menge des zur Terminierung der endständigen NCO-Gruppen benötigten Trimethylolpropanglycidylethers wurde exakt dem nach der ersten Synthesestufe erreichten NCO-Gehalt angepasst. Die zur Verdünnung zugegebene Menge DGEBA wurde bei allen Präpolymeren mit 1/3 der Masse des in der ersten Synthesestufe hergestellten, NCO-endständigen Präpolymers berechnet.

### Beispiel 6 eines kettenverlängerten Polymers B: B-06

Beispiel 6 ***B-06*** ist ein Beispiel eines Polymeren **B**, bei welchem das Y₁-basierende Polymer ein kettenverlängertes Diol darstellt.

200 g PolyTHF 1000 (OH-Zahl 114 mg/g KOH) wurden 30 Minuten unter Vakuum bei 100°C getrocknet. Anschliessend wurden 73.5 g IPDI und 0.04 g Dibutylzinndilaurat zugegeben. Dies entspricht einem molaren [NCO]/[OH] Verhältnis von 1.6 / 1 und führt, wie bereits beschrieben, zu einer Kettenverlängerung des entstehenden Polymers. Die Reaktion wurde unter Vakuum bei 90°C bis zur Konstanz des NCO-Gehaltes bei 4.9% nach 2.5 h geführt (theoretischer NCO-Gehalt: 5.1 %). Anschliessend wurden 186.1 g des oben beschriebenen Trimethylolpropanglycidylethers als monohydroxylhaltiges Epoxid der Formel (III) zugegeben. Es wurde bei 90°C unter Vakuum weitergerührt, bis der NCO-Gehalt nach weiteren 3.5h unter 0.1% gesunken war. Nach Abschluss der Reaktion wurden 91.2 g DGEBA zugegeben (1/3 der Masse des unblockierten, NCO-endständigen Präpolymers). So wurde ein klares Produkt mit einem Epoxid-Gehalt ("End-EP-Gehalt") von 3.50 eq/kg erhalten.

**Tabelle 2**

| Beispiel Nr. | Eingesetzte Polyole (Formel (IV) | Hydroxylzahl (mg/g KOH) | End-EP-Gehalt (eq/kg) |
|---|---|---|---|
| ***B-01*** | PolyTHF 2000 | 57.5 | 3.15 |
| ***B-02*** | Desmophen 3060 BS | 55.5 | 3.10 |
| ***B-03*** | Desmophen 3060 BS / Poly Bd® R45 HT (w/w-Verhältnis 8/2) | 53.5 | 3.13 |
| ***B-04*** | Alcupol® D-2021 | 56.0 | 3.15 |
| ***B-05*** | PolyTHF 2000 / Poly Bd® R45 HT (w/w-Verhältnis 8/2) | 55.5 | 3.13 |
| ***B-06*** | PolyTHF 1000 | 114 | 3.50 |

### Thixotropiermittel C

Als Beispiel für ein Thixotropiermittel **C** auf Basis eines Harnstoffderivates in einem nicht-diffundierenden Trägermaterial wurde ein gemäss Patentanmeldung EP 1 152 019 A1 in einem blockierten Polyurethan-Präpolymer mit oben erwähnten Rohstoffen hergestellt:

### Trägermaterial: Blockiertes PolyurethanPräpolymer C1:

600.0 g eines Polyetherpolyols (3000 g/mol; OH-Zahl 57 mg/g KOH) wurden unter Vakuum und Rühren bei 90°C mit 140.0 g IPDI zum Isocyanat-terminierten Präpolymer umgesetzt, bis der Isocyanatgehalt konstant blieb. Anschliessend wurden die freien Isocyanatgruppen mit Caprolactam (2% Überschuss) blockiert.

### Harnstoffderivat (HSD1) in blockiertem Polyurethan-Präpolymer:

Unter Stickstoff und leichtem Wärmen wurden 68.7 g MDI-Flocken in 181.3 g des oben beschriebenen blockierten Präpolymeres eingeschmolzen. Danach wurden während zwei Stunden unter Stickstoff und schnellem Rühren 40.1 g N-Butylamin gelöst in 219.9 g des oben beschriebenen blockierten Präpolymers zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1% aufwies (Anteil Harnstoffderivat ca. 20%).

### Beispiel-Zusammensetzungen

Als Beispiele wurden diverse Klebstoffzusammensetzungen gemäss Tabelle 3 hergestellt.

Als Vergleich Referenz zu den erfindungsgemässen Beispielzusammensetzungen wurden als nicht erfindungsgemässen Beispiele ***Ref-01*** der hochstrukturelle Epoxidklebstoff Betamate-1493 (kommerziell erhältlich von Dow-Automotive, Freienbach, Schweiz) sowie ***Ref-02*** bis ***Ref-04*** herangezogen.

Die Klebstoffe wurden nach Applikation auf elektrolytisch verzinktem Stahl (eloZn) bei 50°C während 30 Minuten im Ofen bei 180°C ausgehärtet. Alle Prüfungen erfolgten erst nach Abkühlung des Klebstoffes auf Raumtemperatur.

### Prüfmethoden:

### Zuascherfestigkeit (ZSF) (DIN EN 1465)

Die Probekörper wurden mit elektrolytisch verzinktem Stahl (eloZn) mit dem Mass 100 x 25 x 0.8mm hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/Min.

### Schlagschälarbeit (ISO 11343)

Die Probekörper wurden mit elektrolytisch verzinktem Stahl (eloZn) mit dem Mass 90 x 25 x 0.8mm hergestellt, dabei betrug die Klebfläche 25 x 30mm bei einer Schichtdicke von 0.3mm. Gehärtet wurde 30 Min. bei 180°C. Die Zuggeschwindigkeit betrug 2 m/s. Als Bruchenergie in Joule wird die Fläche unter der Messkurve (von 25% bis 90%, gemäss DIN 11343) angegeben.

**Tabelle 3. Zusammensetzungen und Resultate.**

| | ***Ref-01*** | ***Ref-02*** | ***Ref-03*** | ***Ref-04*** | ***Z-01*** | ***Z-02*** | ***Z-03*** | ***Z-04*** | ***Z-05*** | ***Z-06*** |
|---|---|---|---|---|---|---|---|---|---|---|
| **A-VM1** [g] | | 55.6 | 55.6 | 55.6 | 55.6 | 55.6 | 55.6 | 55.6 | 55.6 | 55.6 |
| Zusatz DGEBA[g] | | | | 3.3 | | | | | | |
| Polydis® 3604 [g] | | | 18.0 | | | | | | | |
| ***B-01*** [g] | | | | | 18.0 | | | | | |
| ***B-02*** [g] | | | | | | 18.0 | | | | |
| ***B-03*** [g] | | | | | | | 18.0 | | | |
| ***B-04*** [g] | | | | | | | | 18.0 | | |
| ***B-05*** [g] | | | | | | | | | 18.0 | |
| ***B-06*** [g] | | | | | | | | | | 18.0 |
| C[g] | | 21.0 | 21.0 | 21.0 | 21.0 | 21.0 | 21.0 | 21.0 | 21.0 | 21.0 |
| Zusatz blockiertes Präpolymer(***C1***)[g] | | | | 14.7 | | | | | | |
| Dicyanamid (***D***) [g] | | 3.4 | 3.9 | 3.4 | 4.0 | 4.0 | 4.0 | 3.9 | 4.0 | 4.0 |
| Füllstoffgemisch (***E***) [g] | | 22.0 | 22.0 | 22.0 | 22.0 | 22.0 | 22.0 | 22.0 | 22.0 | 22.0 |
| Hexandioldiglycidylether (F) [g] | | | 1.5 | 1.5 | 1.5 | 1.5 | 1.5 | 1.5 | 1.5 | 1.5 |
| ED-506(***F***) [g] | | 2.4 | 2.4 | 2.4 | 2.4 | 2.4 | 2.4 | 2.4 | 2.4 | 2.4 |
| | | | | | | | | | | |
| ZSF [MPa] | 19.9 | 21.2 | 20.5 | 15.8 | 19.8 | 18.8 | 19.2 | 19.6 | 19.1 | 20.7 |
| BE¹ bei 50°C [J] | 18.0 | 14.0 | 12.3 | 8.8 | 14.3 | 12.9 | 13.6 | 14.9 | 13.6 | 14.5 |
| BE¹ bei 23°C [J] | 17.8 | 11.2 | 9.6 | 7.4 | 14.4 | 13.0 | 13.2 | 13.2 | 14.0 | 14.7 |
| BE¹ bei 0°C [J] | 16.2 | 5.8 | 6.3 | 6.4 | 14.0 | 12.4 | 12.9 | 12.0 | 12.9 | 13.5 |
| BE¹ bei -20°C [J] | 4.2 | 2.4 | 2.1 | 2.1 | 11.9 | 10.5 | 9.4 | 7.4 | 9.8 | 9.2 |
| BE¹ bei -40°C [J] | 0.5 | 0.4 | 0.2 | 0.4 | 6.0 | 2.6 | 4.1 | 1.6 | 4.0 | 3.5 |

| | | | | | | | | | | |
|---|---|---|---|---|---|---|---|---|---|---|
| ¹BE =Bruchenergie | | | | | | | | | | |

### Resultate

Die Resultate der Klebstoffformulierungen in Tabelle 3 zeigen, dass mit den erfindungsgemässen Zusammensetzungen die Kombination von hoher Festigkeit und hoher Schlagzähigkeit sowohl bei Raumtemperatur wie auch bei tiefen Temperaturen bis -40°C erreicht werden können.

Das Referenzbeispiel ***Ref-01*** zeigt zwar gute Schlagzähigkeitsfestigkeiten bei Temperaturen über 0°C, weist aber bei tiefen Temperaturen, d.h. unter 0°C im Vergleich zu den erfindungsgemässen Klebstoffen bedeutend tiefere Werte auf.

Das Referenzbeispiel ***Ref-02*** unterscheidet sich von den erfindungsgemässen Beispielen im Wesentlichen durch die Abwesenheit des Epoxidgruppen-terminierten Schlagzähigkeitsmodifikators der Formel (I). Die Resultate zeigen, dass zwar die Zusammensetzung zwar bei 50°C vergleichbare Schlagzähigkeitsfestigkeiten wie die erfindungsgemässen Zusammensetzungen aufweist, bei tieferen Temperaturen, insbesondere 0°C und tiefer, jedoch massiv schlechter als diese ist.

Das Referenzbeispiel ***Ref-03*** beinhaltet ein kommerziell erhältliches Epoxidgruppen-terminiertes Poly-butadien-Acrylnitril-Copolymer versetzt. Die Resultate zeigen jedoch, dass die Schlagzähigkeitsfestigkeiten unter 50°C deutlich schlechter als die der erfindungsgemässen Zusammensetzungen sind.

Das Referenzbeispiel ***Ref-04*** unterscheidet sich von ***Ref-02*** im Wesentlichen dadurch, dass es doppelt soviel blockiertes Polyurethan-Präpolymer des Thixotropiermittels enthält. Die Resultate zeigen aber jedoch, dass dies trotz seines flexibilisierenden Charakters keineswegs förderlich für die Schlagzähigkeitsfestigkeiten ist.

Die erfindungsgemässen Zusammensetzungen ***Z-01*** bis ***Z-06*** zeigen alle gute Bruchenergien. Besonders vorteilhaft sind diese Werte bei Temperaturen zwischen 0°C und -40°C.

## Patentansprüche

1. Zusammensetzung umfassend
mindestens ein Epoxid-Addukt **A** mit durchschnittlich mehr als einer Epoxidgruppe pro Molekül;
mindestens ein Polymer **B** der Formel (I) 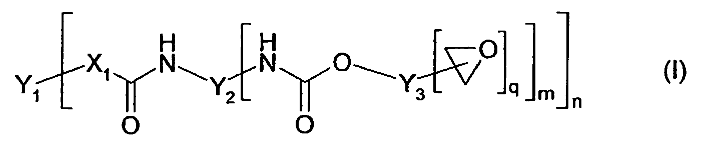 wobei
X₁ = O, S oder NH ist;
Y₁ für einen n-wertigen Rest eines reaktiven Polymers nach dem Entfernen der endständigen, Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht,
oder für einen trivalenten Rest von Trimeren oder Biureten von aliphatischen, cycloaliphatischen, aromatischen oder araliphatischen Diisocyanaten nach Entfernen der Isocyanatgruppen steht;
Y₃ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
q = 1, 2 oder 3 ist;
m = 1 oder 2 ist;
n = 2, 3 oder 4 ist;
mindestens ein Thixotropiermittel **C**, auf Basis eines Harnstoffderivates in einem nicht-diffundierenden Trägermaterial;
sowie
mindestens einen Härter **D** für Epoxidharze, welcher durch erhöhte Temperatur aktiviert wird.

2. Zusammensetzung gemäss Anspruch 1, **dadurch gekennzeichnet, dass** das Epoxid-Addukt **A**, erhältlich ist aus der Reaktion
von mindestens einer Dicarbonsäure und mindestens einem Diglycidylether;
oder
von mindestens einem Bis(aminophenyl)sulfon-Isomeren oder von mindestens einem aromatischen Alkohol und mindestens einem Diglycidylether.

3. Zusammensetzung gemäss Anspruch 2, **dadurch gekennzeichnet, dass** die Dicarbonsäure eine dimere Fettsäure, insbesondere mindestens eine dimere C4 - C20 Fettsäure, ist und der Diglycidylether Bisphenol-A-diglycidylether, Bisphenol-F-diglycidylether oder Bisphenol-A/F-diglycidylether ist.

4. Zusammensetzung gemäss Anspruch 2 oder 3, **dadurch gekennzeichnet, dass** der aromatische Alkohol ausgewählt ist aus der Gruppe 2,2-Bis(4-hydroxyphenyl)propan, Bis(4-hydroxyphenyl)methan, Bis(4-hydroxyphenyl)sulfon, Hydrochinon, Resorcin, Brenzkatechin, Naphthohydrochinon, Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan sowie alle Isomeren der vorgenannten Verbindungen und der Diglycidylether Bisphenol-A-diglycidylether, Bisphenol-F-diglycidylether oder Bisphenol-A/F-diglycidylether ist.

5. Zusammensetzung gemäss einem der vorhergehenden Ansprüche, **dadurch gekennzeichnet, dass** das Polymer **B** elastisch ist.

6. Zusammensetzung gemäss einem der vorhergehenden Ansprüche, **dadurch gekennzeichnet, dass** das Polymer **B** in Epoxidharzen löslichen oder dispergierbar ist.

7. Zusammensetzung gemäss einem der vorhergehenden Ansprüche, **dadurch gekennzeichnet, dass** in Formel (I) n=2 oder 3 ist.

8. Zusammensetzung gemäss einem der vorhergehenden Ansprüche, **dadurch gekennzeichnet, dass** das Y₁ in Formel (I) zugrunde liegende Polymer ein α,ω- Polyalkylenglykol mit C₂-C₆-Alkylengruppen oder mit gemischten C₂-C₆- Alkylengruppen ist, welches mit Amino-, Thiol- oder, bevorzugt, Hydroxylgruppen terminiert ist.

9. Zusammensetzung gemäss einem der vorhergehenden Ansprüche, **dadurch gekennzeichnet, dass** das Y₁ in Formel (I) zugrunde liegenden Polymer ein OH-Equivalenzgewicht von 600 - 6'000 g/OH-Equivalent, insbesondere von 700 - 2200 g/OH-Equivalent ist.

10. Zusammensetzung gemäss einem der vorhergehenden Ansprüche, **dadurch gekennzeichnet, dass** m=1 ist, und das Y₂ in Formel (I) zugrunde liegende Diisocyanat bevorzugt HDI, IPDI, MDI oder TDI ist.

11. Zusammensetzung gemäss einem der vorhergehenden Ansprüche, **dadurch gekennzeichnet, dass** der Gewichtsanteil aller Polymere B der Formel (I) zwischen 5 und 40 Gewichts-%, vorzugsweise zwischen 7 und 30 Gewichts-% bezogen auf das Gewicht der gesamten Zusammensetzung beträgt.

12. Zusammensetzung gemäss einem der vorhergehenden Ansprüche, **dadurch gekennzeichnet, dass** das Trägermaterial des Thixotropiermittels **C** ein blockiertes Polyurethanpräpolymer ist.

13. Zusammensetzung gemäss einem der vorhergehenden Ansprüche, **dadurch gekennzeichnet, dass** das Harnstoffderivat im Thixotropiermittel C das Produkt der Umsetzung eines aromatischen monomeren Diisocyanaten, insbesondere 4,4'-Diphenyl-methylen-diisocyanat, mit einer aliphatischen Aminverbindung, insbesondere Butylamin ist.

14. Zusammensetzung gemäss einem der vorhergehenden Ansprüche, **dadurch gekennzeichnet, dass** der Gesamtanteil des Thixotropiermittels **C** 5 - 40 Gewichts-%, vorzugsweise 10 - 25 % Gewichts-%, bezogen auf das Gewicht der gesamten Zusammensetzung, beträgt.

15. Zusammensetzung gemäss Anspruch 14, **dadurch gekennzeichnet, dass** der Anteil des Harnstoffderivats 5- 50 Gewichts-%, vorzugsweise 15 - 30 Gewichts-%, bezogen auf das Gewicht des Thixotropiermittels **C**, beträgt.

16. Zusammensetzung gemäss einem der vorhergehenden Ansprüche, **dadurch gekennzeichnet, dass** der Härter **D** ein latenter Härter ist ausgewählt aus der Gruppe umfassend Dicyandiamid, Guanamine, Guanidine und Aminoguanidine.

17. Zusammensetzung gemäss einem der vorhergehenden Ansprüche, **dadurch gekennzeichnet, dass** der Gesamtanteil des Härters **D** 1 - 10 Gewichts-%, vorzugsweise 2 - 8 Gewichts-%, bezogen auf das Gewicht der gesamten Zusammensetzung, beträgt.

18. Zusammensetzung gemäss einem der vorhergehenden Ansprüche, **dadurch gekennzeichnet, dass** zusätzlich mindestens ein Füllstoff **E** vorhanden ist.

19. Zusammensetzung gemäss Anspruch 18, **dadurch gekennzeichnet, dass** der Gesamtanteil des Füllstoffs **E** 5 - 30 Gewichts-%, vorzugsweise 10 - 25 Gewichts-%, bezogen auf das Gewicht der gesamten Zusammensetzung, beträgt.

20. Zusammensetzung gemäss einem der vorhergehenden Ansprüche, **dadurch gekennzeichnet, dass** zusätzlich mindestens ein epoxidgruppentragender Reaktivverdünner **F** vorhanden ist.

21. Zusammensetzung gemäss einem der vorhergehenden Ansprüche, **dadurch gekennzeichnet, dass** die Zusammensetzung nach Aushärtung eine Tieftemperatur-Bruchenergie gemessen nach DIN 11343 von mehr als 10 J bei 0°C und bevorzugt mehr als 1.0 J bei -40°C, aufweist.

22. Epoxidgruppen-terminierter Schlagzähigkeitsmodifikator der Formel (I) 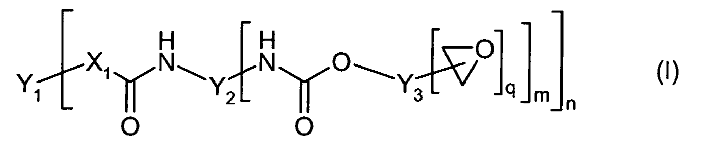 wobei
X₁ = O, S, NH oder ist;
Y₁ für einen n-wertigen Rest eines reaktiven Polymeren nach dem Entfernen der endständigen, Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht,
oder für einen trivalenten Rest von Trimeren oder Biureten von aliphatischen, cycloaliphatischen, aromatischen oder araliphatischen Diisocyanaten nach Entfernen der Isocyanatgruppen steht;
Y₃ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
q = 1, 2 oder 3 ist;
m = 1 oder 2 ist;
n = 2, 3 oder 4; bevorzugt 2 oder 3, ist.

23. Epoxidgruppen-terminierter Schlagzähigkeitsmodifikator gemäss Anspruch 22, **dadurch gekennzeichnet, dass** das Y₁ in Formel (I) zugrunde liegenden Polymer ein α,ω- Polyalkylenglykol mit C₂-C₆₋Alkylengruppen oder oder mit gemischten C₂-C₆- Alkylengruppen ist, das mit Amino-, Thiol- oder, bevorzugt, Hydroxylgruppen terminiert ist.

24. Epoxidgruppen-terminierter Schlagzähigkeitsmodifikator gemäss Anspruch 22 oder 23, **dadurch gekennzeichnet, dass** das Y₁ in Formel (I) zugrunde liegenden Polymer ein Diol oder Triol mit einem OH-Equivalenzgewicht von 600 - 6'000 g/mol, insbesondere von 700 - 2200 g/OH-Equivalent ist.

25. Verwendung eines Epoxidgruppen-terminierten Schlagzähigkeitsmodifikators gemäss einem der Ansprüche 22 bis 24 in einem einkomponentigen hitzehärtenden Epoxidharzklebstoff.

26. Verwendung eines Epoxidgruppen-terminierten Schlagzähigkeitsmodifikators gemäss einem der Ansprüche 22 bis 24 in einem zweikomponentigen Epoxidharzklebstoff.

27. Verwendung einer Zusammensetzung gemäss einem der Ansprüche 1 bis 21 als einkomponentiger Klebstoff.

28. Verwendung gemäss Anspruch 27, **dadurch gekennzeichnet, dass** der Klebstoff für das Verkleben von hitzestabilen Materialien, insbesondere von Metallen, verwendet wird.

29. Verwendung gemäss Anspruch 27 oder 28, **dadurch gekennzeichnet, dass** der Klebstoff als Rohbauklebstoff im Automobilbau verwendet wird.

30. Verfahren zum Verkleben von hitzestabilen Materialien, insbesondere von Metallen, **dadurch gekennzeichnet, dass** diese Materialien mit einer Zusammensetzung gemäss einem der Ansprüche 1 bis 21 kontaktiert werden und einen Schritt des Aushärtens bei einer Temperatur von 100 - 220 °C, vorzugsweise 120 - 200°C umfasst.

31. Verwendung gemäss Anspruch 30, **dadurch gekennzeichnet, dass** diese Materialien mit einer Zusammensetzung gemäss einem der Ansprüche 1 - 21 kontaktiert werden und dass die verklebten Materialien bei Temperatur zwischen 100°C und -40°C, vorzugsweise zwischen 80°C und -40°C, insbesondere zwischen 50°C und -40°C eingesetzt werden.

## Claims

1. A composition comprising
at least one epoxide adduct **A** having on average more than one epoxide group per molecule;
at least one polymer **B** of the formula (I) 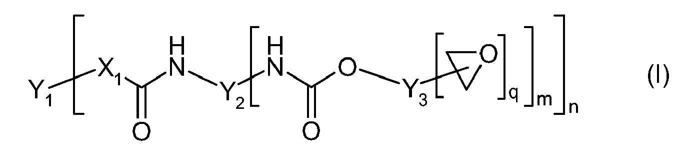 in which
X₁ is O, S or NH;
Y₁ is an n-valent radical of a reactive polymer after removal of the terminal amino, thiol or hydroxyl groups;
Y₂ is a divalent radical of aliphatic, cycloaliphatic, aromatic or araliphatic diisocyanates after removal of the isocyanate groups
or is a trivalent radical of trimers or biurets of aliphatic, cycloaliphatic, aromatic or araliphatic diisocyanates after removal of the isocyanate groups;
Y₃ is a radical of an aliphatic, cycloaliphatic, aromatic or araliphatic epoxide containing a primary or secondary hydroxyl group after removal of the hydroxide and epoxide groups;
q is 1, 2 or 3;
m is 1 or 2; and
n is 2, 3 or 4;
at least one thixotropic agent **C** based on a urea derivative in a non-diffusing carrier material;
and
at least one hardening agent **D** for epoxy resins which is activated by elevated temperature.

2. The composition as claimed in claim 1, **characterized in that** the epoxide adduct **A** is obtainable from the reaction
of at least one dicarboxylic acid and at least one diglycidyl;
or
of at least one bis(aminophenyl) sulfone isomer or of at least one aromatic alcohol and at least one diglycidyl ether.

3. The composition as claimed in claim 2, **characterized in that** the dicarboxylic acid is a dimeric fatty acid, in particular at least one dimeric C₄-C₂₀ fatty acid, and the diglycidyl ether is bisphenol A diglycidyl ether, bisphenol F diglycidyl ether or bisphenol A/F diglycidyl ether.

4. The composition as claimed in claim 2 or 3, **characterized in that** the aromatic alcohol is selected from the group consisting of 2,2-bis(4-hydroxyphenyl)propane, bis(4-hydroxyphenyl)-methane, bis(4-hydroxyphenyl)sulfone, hydroquinone, resorcinol, pyrocatechol, naphtho-hydroquinone, napthoresorcinol, dihydroxynaphthalene, dihydroxyanthraquinone, dihydroxy-biphenyl, 3,3-bis(p-hydroxyphenyl)phthalides, 5,5-bis(4-hydroxyphenyl)hexahydro-4,7-methanoindane and all isomers of the abovementioned compounds and the diglycidyl ether is bisphenol A diglycidyl ether, bisphenol F diglycidyl ether or bisphenol A/F diglycidyl ether.

5. The composition as claimed in any of the preceding claims, **characterized in that** the polymer **B** is resilient.

6. The composition as claimed in any of the preceding claims, **characterized in that** the polymer **B** is soluble or dispersible in epoxy resins.

7. The composition as claimed in any of the preceding claims, **characterized in that**, in formula (I), n is 2 or 3.

8. The composition as claimed in any of the preceding claims, **characterized in that** the polymer on which Y₁ in formula (I) is based is an α,ω-polyalkylene glycol having C₂-C₆-alkylene groups or having mixed C₂-C₆-alkylene groups which is terminated with amino, thiol or, preferably, hydroxyl groups.

9. The composition as claimed in any of the preceding claims, **characterized in that** the polymer on which Y₁ in formula (I) is based is an OH equivalent weight of 600 - 6000 g/OH equivalent, in particular of 700 - 2000 g/OH equivalent.

10. The composition as claimed in any of the preceding claims, **characterized in that** m is 1 and the diisocyanate on which Y₂ in formula (I) is based is preferably HDI, IPDI, MDI or TDI.

11. The composition as claimed in any of the preceding claims, **characterized in that** the proportion by weight of all polymers **B** of the formula (I) is from 5 to 40% by weight, preferably from 7 to 30% by weight, based on the weight of the total composition.

12. The composition as claimed in any of the preceding claims, **characterized in that** the carrier material of the thixotropic agent **C** is a blocked polyurethane prepolymer.

13. The composition as claimed in any of the preceding claims, **characterized in that** the urea derivative in the thixotropic agent **C** is the product of the reaction of an aromatic monomeric diisocyanate, in particular 4,4'-diphenylmethylene diisocyanate, with an aliphatic amine compound, in particular butylamine.

14. The composition as claimed in any of the preceding claims, **characterized in that** the proportion by weight of the thixotropic agent **C** is 5 - 40% by weight, preferably 10 - 25% % by weight, based on the weight of the total composition.

15. The composition as claimed in claim 14, **characterized in that** the proportion of the urea derivative is 5 - 50% by weight, preferably 15 - 30% by weight, based on the weight of the thixotropic agent **C**.

16. The composition as claimed in any of the preceding claims, **characterized in that** the hardening agent **D** is a latent hardening agent selected from the group consisting of dicyandiamide, guanamines, guanidines and aminoguanidines.

17. The composition as claimed in any of the preceding claims, **characterized in that** the total proportion of the hardening agent **D** is 1 - 10% by weight, preferably 2 - 8% by weight, based on the weight of the total composition.

18. The composition as claimed in any of the preceding claims, **characterized in that** at least one filler **E** is additionally present.

19. The composition as claimed in claim 18, **characterized in that** the total proportion of the filler **E** is 5 - 30% by weight, preferably 10 - 25% by weight, based on the weight of the total composition.

20. The composition as claimed in any of the preceding claims, **characterized in that** at least one reactive diluent **F** carrying epoxide groups is additionally present.

21. The composition as claimed in any of the preceding claims, **characterized in that**, after hardening, the composition has a low-temperature fracture energy, measured according to DIN 11343, of more than 10 J at 0°C and preferably more than 1.0 J at -40°C.

22. An impact modifier terminated by epoxide groups of the formula (I) 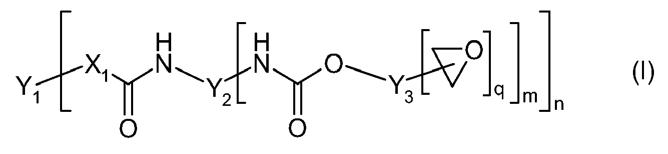 in which
X₁ is O, S or NH;
Y₁ is a n-valent radical of a reactive polymer after removal of the terminal amino, thiol or hydroxyl groups;
Y₂ is a divalent radical of aliphatic, cycloaliphatic, aromatic or araliphatic diisocyanates after removal of the isocyanate groups
or is a trivalent radical of trimers or biurets of aliphatic, cycloaliphatic, aromatic or araliphatic diisocyanates after removal of the isocyanate groups;
Y₃ is a radical of an aliphatic, cycloaliphatic, aromatic or araliphatic epoxide containing a primary or secondary hydroxyl group after removal of the hydroxide and epoxide groups;
q is 1, 2 or 3;
m is 1 or 2; and
n is 2, 3 or 4; preferably 2 or 3.

23. The impact modifier terminated by epoxide groups and as claimed in claim 22, **characterized in that** the polymer on which Y₁ in formula (I) is based is an α,ω-polyalkylene glycol having C₂-C₆-alkylene groups or or having mixed C₂-C₆-alkylene groups which is terminated by amino, thiol or, preferably, hydroxyl groups.

24. The impact modifier terminated by epoxide groups and as claimed in claim 22 or 23, **characterized in that** the polymer on which Y₁ in formula (I) is based is a diol or triol having an OH equivalent weight of 600 - 6000 g/mol, in particular of 700 - 2200 g/OH equivalent.

25. The use of an impact modifier terminated by epoxide groups and as claimed in any of claims 22 to 24 in a one-component thermally hardening epoxy resin adhesive.

26. The use of an impact modifier terminated by epoxide groups and as claimed in any of claims 22 to 24 in a two-component epoxy resin adhesive.

27. The use of a composition as claimed in any of claims 1 to 21 as a one-component adhesive.

28. The use as claimed in claim 27, **characterized in that** the adhesive is used for the adhesive bonding of heat-stable materials, in particular of metals.

29. The use as claimed in claim 27 or 28, **characterized in that** the adhesive is used as a body-shell construction adhesive in automotive construction.

30. A method for the adhesive bonding of heat-stable materials, in particular of metals, **characterized in that** these materials are brought into contact with a composition as claimed in any of claims 1 to 21 and comprises a hardening step at a temperature of 100 - 220°C, preferably 120 - 200°C.

31. The use as claimed in claim 30, **characterized in that** these materials are brought into contact with a composition as claimed in any of claims 1 - 21, and **in that** the adhesively bonded materials are used at a temperature of from 100°C to -40°C, p referably from 80°C to -40°C, in particular from 50°C to -40°C.

## Revendications

1. Composition comprenant
au moins un produit d'addition d'époxyde **A** renfermant en moyenne plus d'un groupe époxyde par molécule;
au moins un polymère **B** de formule (I) 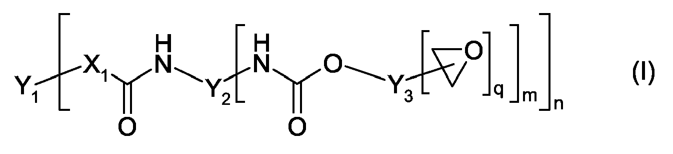 dans laquelle
X₁ représente un atome d'oxygène, un atome de soufre ou un groupe NH;
Y₁ représente un radical-N valent d'un polymère réactif après l'élimination des groupes terminaux amino, thiol ou hydroxyle;
Y₂ représente un radical bivalent de diisocyanates aliphatiques, cycloaliphatiques, aromatiques ou araliphatiques, après élimination des groupes isocyanate,
ou représente un radical trivalent de trimères ou de biurets de diisocyanates aliphatiques, cycloaliphatiques, aromatiques ou araliphatiques, après l'élimination des groupes isocyanate;
Y₃ représente un radical d'un époxyde aliphatique, cycloaliphatique, aromatique ou araliphatique, renfermant un groupe hydroxyle primaire ou secondaire, après l'élimination des groupes hydroxyde et époxyde;
q vaut 1, 2 ou 3;
m vaut 1 ou 2;
n vaut 2, 3 ou 4;
au moins un agent thixotrope **C**, à base d'un dérivé de l'urée dans une matière de support non diffusante;
ainsi que
au moins un agent de durcissement **D** pour des résines époxy, qui est activé par une température élevée.

2. Composition selon la revendication 1, **caractérisée en ce que** le produit d'addition d'époxyde **A** peut être obtenu par la réaction
d'au moins un acide dicarboxylique et d'au moins un éther diglycidylique;
ou d'au moins un isomère de bis(aminophényl)sulfone ou d'au moins alcool aromatique et d'au moins un éther diglycidylique.

3. Composition selon la revendication 2, **caractérisée en ce que** l'acide dicarboxylique est un acide gras dimère, en particulier un acide gras en C₄-C₂₀ dimère, et l'éther diglycidylique est l'éther diglycidylique de bisphénol A, l'éther diglycidylique de bisphénol F ou l'éther diglycidylique de bisphénol A/F.

4. Composition selon la revendication 2 ou 3, **caractérisée en ce que** l'alcool aromatique est choisi parmi le groupe constitué du 2,2-bis(4-hydroxyphényl)propane, du bis(4-hydroxyphényl)-méthane, de la bis(4-hydroxyphényl)sulfone, de l'hydroquinone, du résorcinol, du pyrocatéchol, de la naphtohydroquinone, du naphtorésorcinol, du dihydroxynaphtalène, de la dihydroxyanthraquinone, du dihydroxy-biphényle, du 3,3-bis(p-hydroxyphényl)phtalide, du 5,5bis(4-hydroxyphényl)hexahydro-4,7-méthano-indane ainsi que de tous les isomères des composés susmentionnés et l'éther diglycidylique de bisphénol A, l'éther diglycidylique de bisphénol F, ou l'éther diglycidylique de bisphénol A/F.

5. Composition selon l'une quelconque des revendications précédentes, **caractérisée en ce que** le polymère **B** est élastique.

6. Composition selon l'une quelconque des revendications précédentes, **caractérisée en ce que** le polymère **B** est soluble ou dispersable dans des résines époxy.

7. Composition selon l'une quelconque des revendications précédentes, **caractérisée en ce que** dans la formule (I) n vaut 2 ou 3.

8. Composition selon l'une quelconque des revendications précédentes, **caractérisée en ce que** le polymère formant la base de Y₁ dans la formule (I) est un α,ω-polyalkylèneglycol renfermant des groupes alkylène en C₂-C₆ ou renfermant des groupes alkylène en C₂-C₆ mixtes, qui est terminé par des groupes amino, thiol ou, de préférence, hydroxyle.

9. Composition selon l'une quelconque des revendications précédentes, **caractérisée en ce que** le polymère formant la base de Y₁ dans la formule (I) présente un poids équivalent de OH de 600 à 6000 g/équivalent de OH, en particulier de 700 à 2200 g/équivalent de OH.

10. Composition selon l'une quelconque des revendications précédentes, **caractérisée en ce que** m vaut 1, et le diisocyanate formant la base de Y₂ dans la formule (I) est de préférence le HDI, l'IPDI, le MDI ou le TDI.

11. Composition selon l'une quelconque des revendications précédentes, **caractérisée en ce que** la proportion pondérale de tous les polymères B de la formule (I) est comprise entre 5 et 40% en poids, de préférence entre 7 et 30% en poids, par rapport au poids de la composition totale.

12. Composition selon l'une quelconque des revendications précédentes, **caractérisée en ce que** la matière de support de l'agent thixotrope C est un prépolymère de polyuréthane bloqué.

13. Composition selon l'une quelconque des revendications précédentes, **caractérisée en ce que** le dérivé de l'urée dans l'agent thixotrope C est le produit de la réaction d'un diisocyanate monomère aromatique, en particulier du diisocyanate de 4,4'-diphénylméthylène, avec un composé amine aliphatique, en particulier la butylamine.

14. Composition selon l'une quelconque des revendications précédentes, **caractérisée en ce que** la proportion totale de l'agent thixotrope **C** est comprise entre 5 et 40% en poids, de préférence entre 10 et 25% en poids, par rapport au poids de la composition totale.

15. Composition selon la revendication 14, **caractérisée en ce que** la proportion du dérivé de l'urée est comprise entre 5 et 50% en poids, de préférence entre 15 et 30% en poids, par rapport au poids de l'agent thixotrope C.

16. Composition selon l'une quelconque des revendications précédentes, **caractérisée en ce que** l'agent de durcissement **D** est un agent de durcissement latent choisi parmi le groupe comprenant le dicyanodiamide, des guanamines, des guanidines et des aminoguanidines.

17. Composition selon l'une quelconque des revendications précédentes, **caractérisée en ce que** la proportion totale de l'agent de durcissement D est comprise entre 1 et 10% en poids, de préférence entre 2 et 8% en poids, par rapport au poids de la composition totale.

18. Composition selon l'une quelconque des revendications précédentes, **caractérisée en ce qu'**au moins une charge **E** est en outre présente.

19. Composition selon la revendication 18, **caractérisée en ce que** la proportion totale de la charge **E** est comprise entre 5 et 30% en poids, de préférence entre 10 et 25% en poids, par rapport au poids de la composition totale.

20. Composition selon l'une quelconque des revendications précédentes, **caractérisée en ce qu'**au moins un diluant réactif portant des groupes époxyde **F** est en outre présent.

21. Composition selon l'une quelconque des revendications précédentes, **caractérisée en ce que** la composition présente, après le durcissement, une énergie de rupture à faible température, mesurée conformément à DIN 11343, supérieure à 10 J à 0°C, et de préférence supérieure à 1,0 J à -40°C.

22. Modificateur de la résistance aux chocs, terminé par des groupes époxyde, de formule (I) 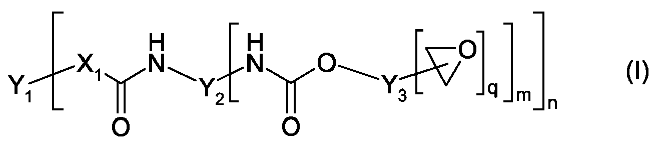 dans laquelle
X₁ représente un atome d'oxygène, un atome de soufre ou un groupe NH;
Y₁ représente un radical-N valent d'un polymère réactif après l'élimination des groupes terminaux amino, thiol ou hydroxyle;
Y₂ représente un radical bivalent de diisocyanates aliphatiques, cycloaliphatiques, aromatiques ou araliphatiques, après élimination des groupes isocyanate,
ou représente un radical trivalent de trimères ou de biurets de diisocyanates aliphatiques, cycloaliphatiques, aromatiques ou araliphatiques, après l'élimination des groupes isocyanate;
Y₃ représente un radical d'un époxyde aliphatique, cycloaliphatique, aromatique ou araliphatique, renfermant un groupe hydroxyle primaire ou secondaire, après l'élimination des groupes hydroxyde et époxyde;
q vaut 1, 2 ou 3;
m vaut 1 ou 2;
n vaut 2, 3 ou 4; de préférence 2 ou 3.

23. Modificateur de la résistance aux chocs, terminé par des groupes époxyde, selon la revendication 22, **caractérisé en ce que** le polymère formant la base de Y₁ dans la formule (I) est un α,ω-polyalkylèneglycol renfermant des groupes alkylène en C₂-C₆ ou renfermant des groupes alkylène en C₂-C₆ mixtes, qui est terminé par des groupes amino, thiol ou, de préférence, hydroxyle.

24. Modificateur de la résistance aux chocs, terminé par des groupes époxyde, selon la revendication 22 ou 23, **caractérisé en ce que** le polymère formant la base de Y₁ dans la formule (I) est un diol ou un triol présentant un poids équivalent de OH de 600 à 6000 g/mol, en particulier de 700 à 2200 g/équivalent de OH.

25. Utilisation d'un modificateur de la résistance aux chocs, terminé par des groupes époxyde, selon l'une quelconque des revendications 22 à 24, dans un adhésif à base de résine époxy thermodurcissant, à un seul composant.

26. Utilisation d'un modificateur de la résistance aux chocs, terminé par des groupes époxyde, selon l'une quelconque des revendications 22 à 24, dans un adhésif à base de résine époxy, à deux composants.

27. Utilisation d'une composition selon l'une quelconque des revendications 1 à 21, en tant qu'adhésif à un seul composant.

28. Utilisation selon la revendication 27, **caractérisée en ce que** l'adhésif est utilisé pour coller des matériaux stables vis-à-vis de la chaleur, en particulier des métaux.

29. Utilisation selon la revendication 27 ou 28, **caractérisée en ce que** l'adhésif est utilisé en tant qu'adhésif de gros oeuvre dans la construction automobile.

30. Procédé pour coller des matériaux stables vis-à-vis de la chaleur, en particulier des métaux, **caractérisé en ce que** ces matériaux sont mis en contact avec une composition selon l'une quelconque des revendications 1 à 21, et comprenant une étape de durcissement à une température de 100 à 220°C, de préférence de 120 à 200°C.

31. Utilisation selon la revendication 30, **caractérisée en ce que** ces matériaux sont mis en contact avec une composition selon l'une quelconque des revendications 1 à 21, et **en ce que** les matériaux collés sont utilisés à une température comprise entre 100°C et -40°C, de préférence entre 80°C et -40°C, en particulier entre 50°C et -40°C.
